# EUROPEAN PATENT APPLICATION

(11) **EP 2 575 368 A1**
(43) Date of publication of application: **03.04.2013**
(21) Application number: 12178669.3
(22) Date of filing: 31.07.2012
(51) Int. Cl.: H04N 13/04

(54) **Display apparatus and image processing method**

(30) Priority: 30.09.2011 KR 20110099760
(71) Applicant: Samsung Electronics Co., Ltd., Suwon-si, Gyeonggi-do, 443-742 (KR)
(72) Inventor: Park, Jae-sung, Gyeonggi-do (KR); Kim, Hyung-rae, Seoul (KR); Min, Kwan-sik, Gyeonggi-do (KR); Sung, Jun-ho, Seoul (KR); Yun, Sang-un, Seoul (KR); Hwang, Min-cheol, Seoul (KR)
(74) Representative: Clark, David James

(57) **Abstract**

A display apparatus and an image processing method are disclosed. The display apparatus including: a signal receiver which receives an image signal including left and right eye images; a signal processor which processes the image signal into a displayable form; a display panel which displays the processed left and right eye image; a polarizer which is provided in a front surface of the display panel, and transmits the left eye image as a first polarized light and transmits the right eye image as a second polarized light; and a controller which controls the signal processor to compensate for color distortion of the first and second polarized lights which pass through the polarizer. With this configuration, the quality of an image that is seen by a user can be improved and color distortion issues can be resolved in a 3D display apparatus.

## Description

### BACKGROUND

### 1. Field

Methods and apparatuses consistent with the exemplary embodiments relate to a display apparatus and an image processing method. More particularly, the exemplary embodiments relate to a 3D display apparatus which employs polarizing glasses.

### 2. Description of the Related Art

A display apparatus processes an image signal or image data, which is input from the outside or stored therein, by various processes, and displays an image on a panel or on a screen. The display apparatus varies by a display method, including a TV, a monitor, etc. Consistent with the development of technology, a display apparatus has emerged which provides a 3D effect on a screen, which is viewed by a user. Such a display apparatus separately displays an image which is recognized by user's left eye and the user's right eye. A user simultaneously views, different left and right eye images to, thereby experience the 3D effect.

In the most general method for using the 3D display apparatus, a user wears 3D glasses to recognize a left eye image and a right eye image with his/her left and right eyes. For example, the method includes a method by which a user recognizes left and right eye images with polarizing glasses, by using the polarizing property of light. In the method, by which a user respectively recognizes a left eye image and a right eye image with his/her left and right eyes, an image frame is temporally divided to alternately display a left eye image and a right eye image on a display panel.

The 3D display apparatus which requires a user to wear the 3D glasses causes color distortion such as chromatic dispersion, so that a user may not be able to correctly view an image which was intended to be displayed.

### SUMMARY

Accordingly, one or more exemplary embodiments provide a display apparatus and an image processing method which improves the quality of an image that is recognized by a user.

The foregoing and/or other aspects may be achieved by providing a display apparatus including: a signal receiver which receives an image signal including left and right eye images; a signal processor which processes the image signal into a displayable form; a display panel which displays the processed left and right eye images; a polarizer which is provided in a front surface of the display panel, and transmits the left eye image as a first polarized light and transmits the right eye image as a second polarized light; and a controller which controls the signal processor to compensate for color distortion of the first and second polarized lights which pass through the polarizer.

The left and right eye images may be alternately displayed, and alternatively, the polarizer may transmit the left and right eye images as the first and second polarized light, in a 3D output mode.

The controller may control the signal processor to compensate for color distortion of light which passes through 3D glasses. The 3D glasses comprise a left eye lens which transmits the first polarized light and a right eye lens which transmits the second polarized light.

The display apparatus may further include a storage unit which stores therein at least one of color distortion information of the 3D glasses and color distortion information of the polarizer. The controller may control the signal processor according to the information stored in the storage unit.

The display apparatus may further include a color distortion measurer which measures a degree of color distortion of the first and second polarized lights which pass through the polarizer. The controller may control the compensation for the image according to the measurement result of the color distortion measurer.

The display apparatus may further include a panel driver which drives the display panel. The controller may control adjustment of a driving voltage of RGB colors of the panel driver according to the degree of color distortion.

The polarizer may transmit the first and second polarized lights as linearly polarized light. The polarizing directions of the first and second polarized lights may be perpendicular to each other.

The polarizer may transmit the first and second polarized lights as circularly polarized light. The polarizing directions of the first and second polarized lights may be opposite from each other.

The foregoing and/or other aspects may be achieved by providing an image processing method of a display apparatus which includes a display panel displaying thereon a left eye image and a right eye image and a polarizer which transmits the left eye image as a first polarized light and transmits the right eye image as a second polarized light. The method includes: receiving an image signal including a left eye image and a right eye image; processing the image signal into a displayable form; and compensating for color distortion of the first and second polarized lights which pass through the polarizer.

The left and right eye images may be alternately displayed, and the polarizer may alternatively transmit the left and right eye images as the first and second polarized lights in a 3D output mode.

The compensating for the color distortion may include compensating for color distortion of light which passes through 3D glasses including a left eye lens transmitting the first polarized light and a right eye lens transmitting the second polarized light.

The method may further include storing at least one of color distortion information of the 3D glasses and color distortion information of the polarizer. The compensating for the color distortion may include compensating for the color distortion according to the stored information.

The method may further include measuring a degree of color distortion of the first and second polarized light which pass through the polarizer. The compensating for the color distortion may include compensating for the color distortion according to the measured degree of color distortion.

The compensating for the color distortion may include compensating for the color distortion by adjusting a driving voltage of RGB colors driving the display panel, according to the degree of the color distortion.

The polarizer may transmit the first and second polarized light as a linearly polarized light. The polarizing directions of the first and second polarized light may be perpendicular to each other.

The polarizer may transmit the first and second polarized light as a circularly polarized light. The polarizing directions of the first and second polarized light may be opposite from each other.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects will become apparent and more readily appreciated from the following description of the exemplary embodiments, taken in conjunction with the accompanying drawings, in which:
FIG. 1 illustrates a process of polarizing, and providing a user with, an image of a display apparatus according to an exemplary embodiment of the present inventive concept;
FIG. 2 illustrates color distortion which arises in the display apparatus according to an exemplary embodiment of the present inventive concept;
FIG. 3 is a control block diagram of the display apparatus according to an exemplary embodiment of the present inventive concept;
FIG. 4 illustrates change in brightness component of an image which is output as a result of compensation for color distortion according to an exemplary embodiment of the present inventive concept;
FIG. 5 is a first flowchart of an image processing method according to an exemplary embodiment of the present inventive concept; and
FIG. 6 is a second flowchart of the image processing method according to an exemplary embodiment of the present inventive concept.

### DETAILED DESCRIPTION OF EXEMPLARY EMBODIMENTS

Below, exemplary embodiments will be described in detail with reference to the accompanying drawings so as to be easily understood by a person having ordinary knowledge of the art. The exemplary embodiments may be embodied in various forms without being limited to the exemplary embodiments set forth herein. Descriptions of well-known parts are omitted for clarity, and like reference numerals refer to like elements throughout.

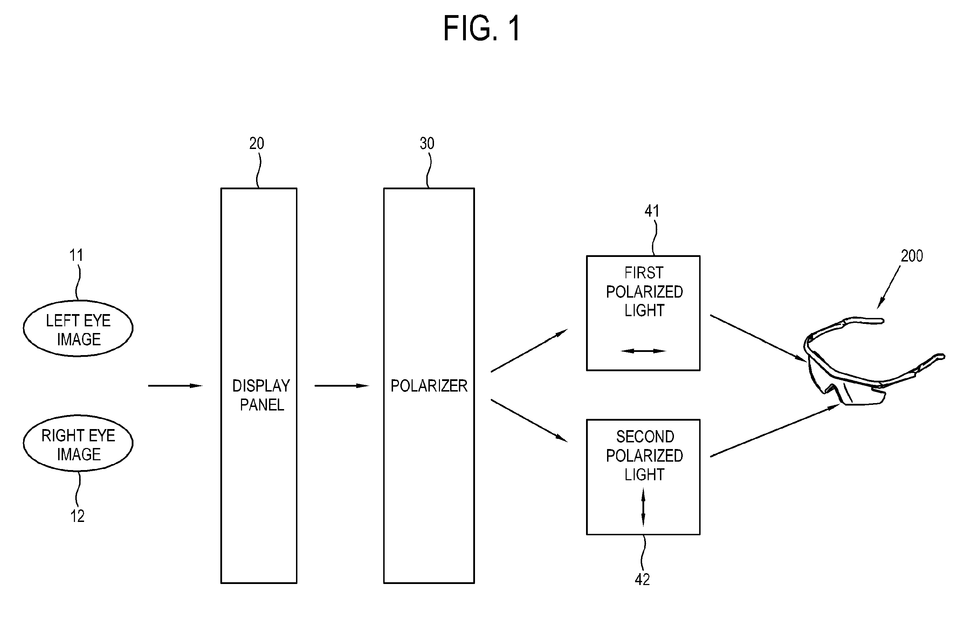

FIG. 1 illustrates an example of a process of polarizing, and providing to a user, an image of a display apparatus 200.

Referring to FIG. 1, a display panel 20 alternately displays thereon a left eye image 11 and a right eye image 12. A polarizer 30 alternately transmits the left eye image 11 and the right eye image 12 as different first polarized light 41 and second polarized light 42. A left eye lens and a right eye lens of 3D glasses 200 worn by a user transmit the first and second polarized lights 41 and 42. As a result, a user may recognize the left eye image with his/her left eye and may recognize the right eye image with his/her right eye. Compared to a conventional 3D display apparatus, this type of 3D display apparatus enables a user to wear light-weight and comfortable 3D glasses, prevents deterioration of resolution and additionally reduces a user's eye fatigue. However, the 3D display apparatus may cause color distortion such as chromatic dispersion due to the polarizer 30 and the 3D glasses 200. Chromatic dispersion is a phenomenon where a particular color component is different from corresponding color components emitted by the display panel 20. This occurs when a light source component which is emitted by the display panel 20 sequentially passes through the polarizer 30 and the 3D glasses 20 and the light source component is manipulated in a polarizing state, failing to uniformly process R, G and B light sources.

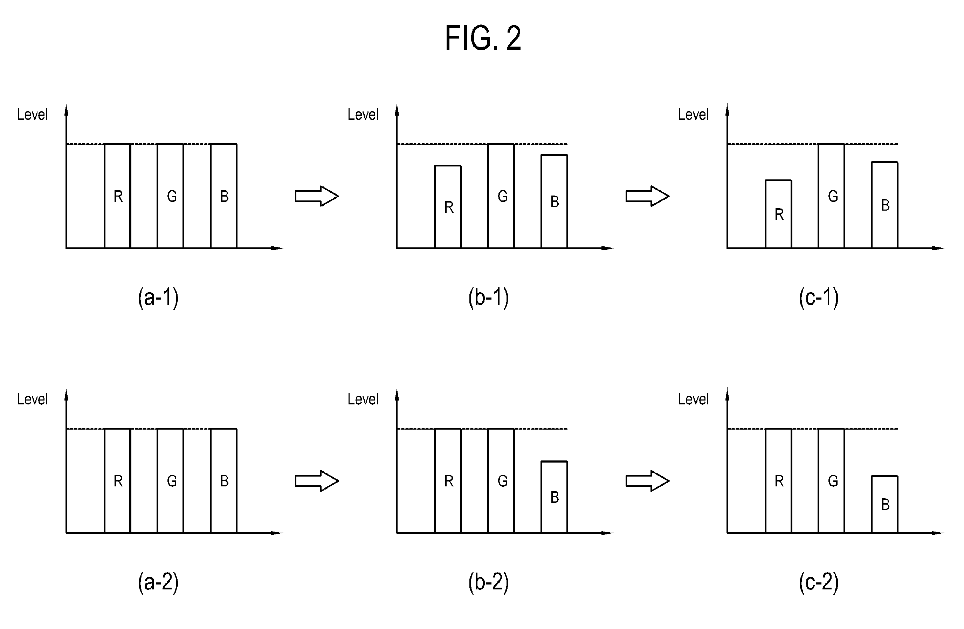

As shown in FIG. 2, if a full white color is output by a backlight (not shown) and displayed on the display panel 20, light which has the same R, G and B brightness components as in (a-1) and (a-2) is output to left and right eye images. While passing through the polarizer 30, the left eye image may be reduced in the R and B components and the right eye image may be reduced in the B component as in (b-1) and (b-2). While passing through the 3D glasses, difference among the R, G and B brightness components becomes greater as in (c-1) and (c-2), and the difference of brightness per color component of left and right eye images may arise.

Hereinafter, a display apparatus and an image processing method thereof which compensates for color distortion such as chromatic dispersion, will be described.

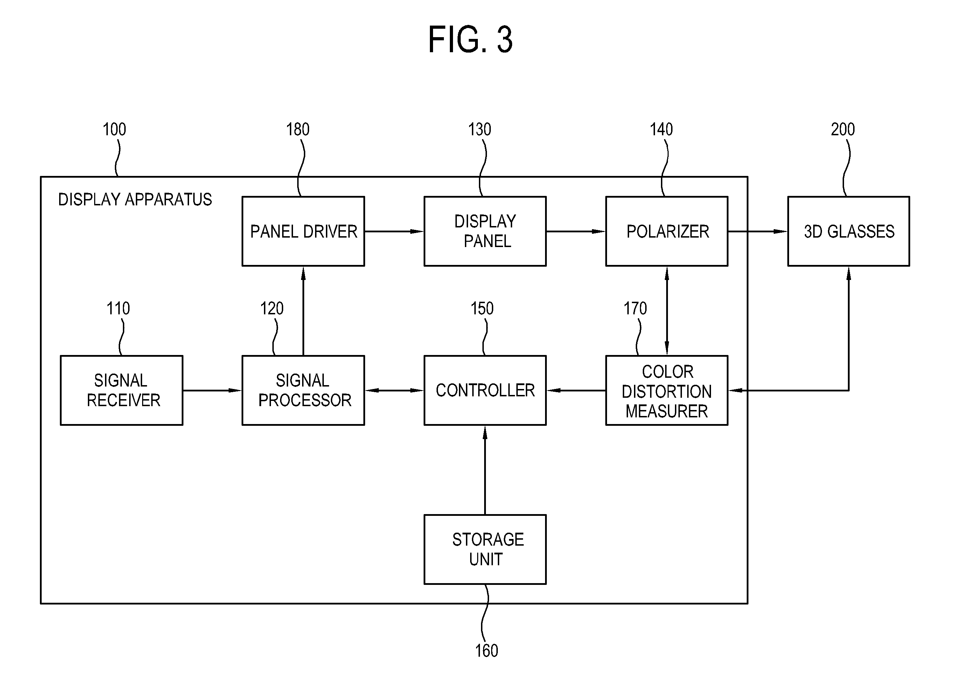

FIG. 3 is a control block diagram of a display apparatus 100 according to an exemplary embodiment of the present inventive concept.

The display apparatus 100 according to the present exemplary embodiment includes a signal receiver 110, a signal processor 120, a display panel 130, a polarizer 140, and a controller 150. The display apparatus 100 may include a TV or a monitor, may display a 3D image content, but not limited thereto.

The signal receiver 110 receives an image signal including a left eye image and a right eye image. The signal receiver 110 receives an image signal including a 3D image content from an external image supply source (not shown). The image supply source may include, without limitation, a computer main body which includes a central processing unit (CPU) and a graphic card, generates an image signal and supplies the image signal locally, a server which supplies an image signal in a network, and a transmission device of a broadcasting station which transmits a broadcasting signal by airwave or cable. The image signal which is transmitted to the signal receiver 110 may be transmitted separately as a left eye image and a right eye image to display 3D image content.

The signal processor 120 receives an image signal from the signal receiver 110 and processes the image signal into a form to be displayed on the display panel 130 (to be described later). The image processing operations of the signal processor 120 may include decoding, deinterlacing, frame refresh rate converting, scaling, noise reducing for improvement of picture quality, detail enhancing and line scanning operations which correspond to various image formats. The signal processor 120 may adjust a depth of a 3D image or convert a 2D image into a 3D image. The signal processor 120 may compensate for color distortion of an output image which corresponds to a control of the controller (to be described later).

The display panel 130 displays a left eye image and a right eye image which are processed by the signal processor 120. The display panel 130 displays thereon light output by the backlight unit, and may include a liquid crystal display (LCD) panel or a plasma display panel (PDP).

The polarizer 140 is provided in a front surface of the display panel 130, and transmits a left eye image as a first polarized light and transmits a right eye image as a second polarized light. The polarizer 140 may include a known polarizing filter which polarizes incident light into linearly polarized light or circularly polarized light.

The left eye image and the right eye image are alternately displayed. The polarizer 140 may transmit the left and right eye images alternately as a first polarized light and a second polarized light, in a 3D output mode. The polarizer 140 alternately receives high/low voltages in synchronization with output left eye/right eye images, and if the left eye image is output, the high voltage is input and the left eye image passes through the polarizer 140 as the first polarized light (e.g., horizontally polarized light). If the right eye image is output, the low voltage is input and the right eye image passes through the polarizer 140 as the second polarized light (e.g., vertically polarized light). The first and second polarized lights are linearly polarized light and their polarizing directions may be perpendicular to each other. The first and second polarized lights may be circularly polarized light or elliptically polarized lights and their polarizing directions may be opposite from each other.

A left eye lens of the 3D glasses 200 worn by a user transmits only the first polarized light and the right eye lens transmits only the second polarizing lens so that a user may recognize only the left eye image with his/her left eye and recognize only the right eye image with his/her right eye. As a result, a user may experience the 3D effect from an output image.

The controller 150 controls overall operations of the display apparatus 100 according to the present exemplary embodiment. The controller 150 may include a control program, a nonvolatile memory such as a read only memory (ROM) and a flash memory to store therein a control program, a volatile memory such as a random access memory (RAM) to load at least a part of the stored control program, and a microprocessor such as a central processing unit (CPU) and a micro control unit (MPU) to execute the loaded control program.

The controller 150 controls the signal processor 120 to compensate for color distortion of light which is transmitted through the polarizer 140. As described above, as the light which is output through the display panel 130 is polarized as the first and second polarized lights, transmissivity of light may vary by R, G and B color components due to different wavelengths of colors of light. As in FIG. 2, the quantity of light which is transmitted varies by color component, causing color distortion. Such color distortion issue may arise if the polarizer 140 does not operate or does not properly operate, i.e., if an image output mode is a 2D mode. The controller 150 may control the signal processor 120 to compensate for as much as the reduced quantity of the light of brightness level per color component in advance, in order to thereby reduce color distortion.

The color distortion may arise when an image which passes through the polarizer 140 passes through the left and right eye lenses of the 3D glasses 200 worn by a user. As the left eye lens of the 3D glasses 200 only transmits the first polarized light and the right eye lens only transmits the second polarized light, the quantity of the transmitted light varies by RGB color components, causing color distortion. The controller 150 may control the signal processor 120 to compensate for color distortion of light which passes through the 3D glasses 200 including the left eye lens transmitting the first polarized light and the right eye lens transmitting the second polarized light.

A method of measuring a degree of color distortion of light that passes through the polarizer 140 and the 3D glasses 200 according to an exemplary embodiment will now be described.

The display apparatus 100 according to a first exemplary embodiment may further include a storage unit 160 which stores therein at least one of color distortion information of the 3D glasses 200 and color distortion information of the polarizer 140.

The display apparatus 100 according to the present exemplary embodiment employs manual-type 3D polarizing glasses. In the case of the 3D glasses 200, the polarizing property of light may be different due to different manufacturers and manufacturing methods and the limitation in compatibility. Accordingly, the light profile for the reduced quantity of brightness per R, G and B color components may be measured when a particular polarized light passes through the left eye lens and right eye lens of each 3D glasses 200 and the measurement result may be stored in the storage unit 160. In this case, according to the information stored in the storage unit 160, i.e., the light profile per 3D glasses 200, the controller 150 may control the signal processor 120 to compensate for brightness per R, G and B color components of the left and right eye images.

Depending on the type of a polarizing filter which is utilized for the polarizer 140, there may be a difference of the polarizing property of light which passes through the polarizer 140. Accordingly, the information regarding the reduced quantity of brightness per RGB color components of the first and second polarized lights which are polarized by the driving of the high/low voltages of the polarizer 140 may be measured in advance and stored in the storage unit 160. In this case, the controller 150 may control the signal processor 120 to compensate for brightness of RGB color components, according to the information stored in the storage unit 160.

The display apparatus 100 according to a second exemplary embodiment may further include a color distortion measurer 170 which measures the degree of color distortion of first and second polarized lights which pass through the polarizer 140. The color distortion measurer 170 may measure a brightness level of light passing through the polarizer 140 per RGB color components to the controller 150 as a feedback, and the controller 150 may compensate for brightness of the left and right eye images, according to the reduced level of brightness of RGB color components measured by the color distortion measurer 170. The color distortion measurer 170 may be provided in a front surface of the polarizer 140.

The display apparatus 100 may further include a panel driver 180 which drives the display panel 130. The panel driver 180 may display various images on the display panel 130 by adjusting the quantity of light output to the display panel 180 by varying a driving voltage of RGB color components corresponding to an image signal. Accordingly, the controller 150 may compensate for color distortion by changing a brightness level of RGB color components and adjusting the driving voltage of RGB color components of the panel driver 180 output to the display panel 130 according to the degree of color distortion.

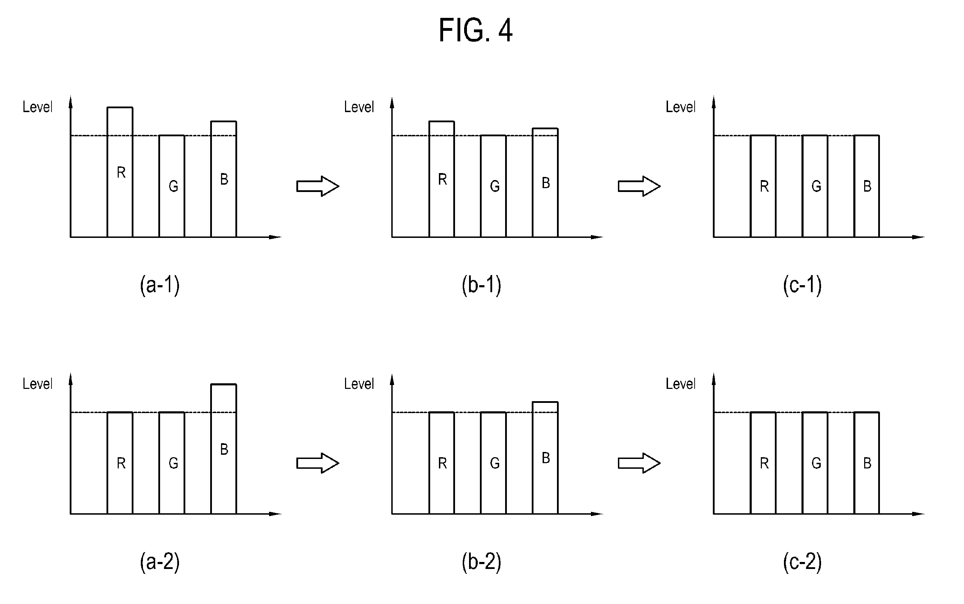

The change of the brightness per RGB color components of an image which is output as a result of the compensation for the color distortion by the controller 150 is as shown in FIG. 4.

(a-1) and (a-2) in FIG. 4 represent graphs of brightness levels of RGB colors when the left and right eye images are output after the RGB brightness is compensated according to the degree of color distortion, so that a user may recognize a full white color. That is, based on the light profile stored in the storage unit 160 or the reduced quantity of brightness measured by the color distortion measurer 170, the left eye image is output (a-1) after the brightness of the R and B components is compensated. In addition, the right eye image is output (a-2) after the brightness of the B component is compensated for. As color distortion arises when the light passes through the polarizer 140, the left eye image has a reduced brightness level of the R and B components (b-1), and the right eye image has a reduced brightness level of the B component (b-2). After passing through the 3D glasses 200, the brightness levels of the RGB components of the left and right eye images are the same (c-1, c-2) so that a user may recognize a full white color.

As a result, the 3D display apparatus 100 which employs the 3D polarizing glasses improves the quality of an image recognized by a user, and resolves the color distortion issue due to manipulation of the polarizing state which cannot be overcome by an optimum design of the polarizer 140.

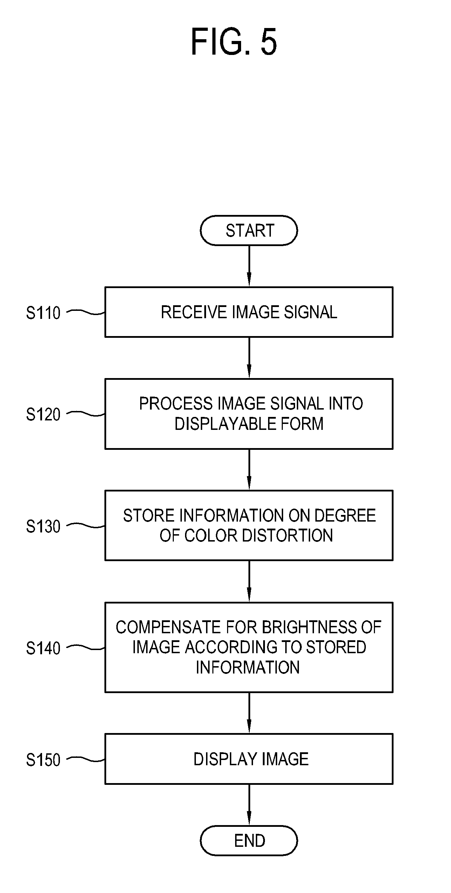

FIG. 5 is a first flowchart of an image processing method according to an exemplary embodiment of the present inventive concept.

The display apparatus 100 which performs the image processing method according to the present exemplary embodiment includes a display panel which displays thereon a left eye image and a right eye image, and a polarizer which is provided in a front surface of the display panel and transmits the left eye image as a first polarized light and transmits the right eye image as a second polarized light. The display panel displays thereon light that is output by a backlight unit (not shown). The display panel may include a liquid crystal display (LCD) panel or a plasma display panel (PDP). The polarizer may include a known polarizing filter which polarizes incident light into linearly polarized light or circularly polarized light.

The display apparatus 100 receives an image signal including a left eye image and a right eye image (S110), and processes the received image signal into a form which is displayed on the display panel (S120).

According to the present exemplary embodiment, an operation of storing at least one of color distortion information of the 3D glasses 200 and color distortion information of the polarizer may be included (S130).

The display apparatus 100 according to the present exemplary embodiment employs manual-type 3D polarizing glasses. In the case of the 3D glasses 200, there are different manufacturers and different manufacturing methods, and there can be differences in polarization of light due to limitations in compatibility, etc. Accordingly, when a particular polarized light passes through the left eye lens and the right eye lens by each of 3D glasses 200, the light profile for the reduced quantity of brightness per color component may be measured in advance and the measurement result may be stored. In this case, the display apparatus 100 may compensate for brightness of RGB color components of left and right eye images according to the stored information, i.e., the light profile per 3D glasses 200.

Depending on the type of polarizing filter which is realized as the polarizer 140, there may be differences in the polarizing property of light which passes through the polarizer 140. Accordingly, the information regarding the reduced quantity of brightness per RGB color components of the first and second polarized lights, which are polarized by the driving of the high/low voltages of the polarizer 140, may be measured in advance and stored. In this case, the display apparatus 100 may compensate for brightness of RGB color components, according to the stored information.

Then, the color distortion of the first and second polarized light which passes through the polarizer is compensated for (S140). As described above, the transmission rate may differ by RGB color component due to the different wavelengths of colors of light, as the light which is output through the display panel 130 is polarized as the first and second polarized light. As illustrated in FIG. 2, the transmission quantity of each color component is different, causing color distortion. The display apparatus 100 may reduce the color distortion by compensating for the reduced quantity of the brightness level per each color component.

The left and right eye images are alternately displayed. In a 3D output mode, the polarizer may alternately transmit the left and right eye images as the first and second polarized light. The polarizer alternately receives high/low voltage in synchronization with an output image. In response to the left eye image being output, a high voltage is input and the left eye image is transmitted as the first polarized light (e.g., horizontally polarized light). In response to the right eye image being output, a low voltage is input and the right eye image is transmitted as the second polarized light (e.g., vertically polarized light).

The first and second polarized lights may be linearly polarized lights, and their polarizing direction may be perpendicular to each other. Alternatively, the first and second polarized lights may be circularly polarized light or elliptically polarized lights, and their polarization direction may be opposite from each other.

As the left eye lens of the 3D glasses 200 worn by a user transmits only the first polarized light, and the right eye lens transmits only the second polarized light, a user may recognize only the left eye image with his/her left eye and recognize only the right eye image with his/her right eye. As a result, a user may experience the 3D effect from an output image.

Color distortion which results from the polarization of light may arise when each image which passes through the polarizer passes through the left eye lens and the right eye lens of the 3D glasses 200 worn by a user. As the left eye lens of the 3D glasses 200 transmits only the first polarized light, and the right eye lens transmits only the second polarized light, the quantity of transmitted light per RGB color components varies, resulting in color distortion. The display apparatus 100 may compensate for color distortion of light which passes through the 3D glasses 200, including the left eye lens transmitting the first polarized light and the right eye lens transmitting the second polarized light.

The operation of compensating for color distortion may compensate for color distortion by adjusting the quantity of light of RGB color components which are output, by adjusting a driving voltage of RGB driving the display panel according to the degree of color distortion.

The display apparatus 100 displays the image of which color distortion is compensated for, on the display panel (S150), and improves the picture quality of an image recognized by a user to thereby resolve the color distortion issue due to the manipulation of polarization which may not be overcome by the optimum design of the polarizer.

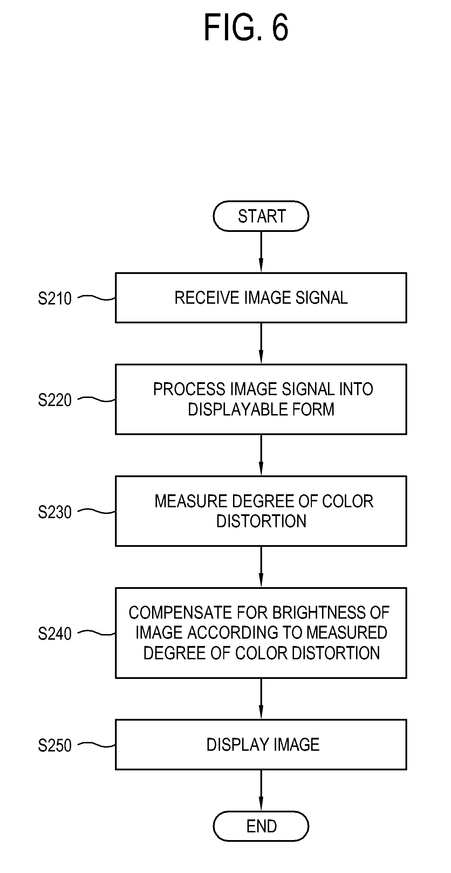

FIG. 6 is a second flowchart of the image processing method according to an exemplary embodiment of the present inventive concept.

The display apparatus 100 receives an image signal including the left and right eye images (S210), and processes the received image signal into a form to be displayed on the display panel (S220).

In relation to the method of measuring the degree of color distortion, the present exemplary embodiment may further include an operation of measuring the degree of color distortion of the first and second polarized light which passes through the polarizer (S230). The display apparatus 100 may measure the brightness level of RGB color components of light which passes through the polarizer, and compensate for the brightness of the left and right eye images according to the reduced quantity of brightness level of color components, as measured (S240).

The display apparatus 100 displays the image of which color distortion is compensated for, on the display panel (S250), and improves the picture quality of an image recognized by a user to thereby resolve the color distortion issue due to the manipulation of polarization which may not be overcome by the optimum design of the polarizer.

As described above, a display apparatus and an image processing method thereof according to the present inventive concept improves a picture quality of an image recognized by a user and resolves color distortion issues in a 3D display apparatus.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a signal receiver which receives an image signal comprising left and right eye images;
a signal processor which processes the image signal into a displayable form;
a display panel which displays the processed left and right eye images;
a polarizer which is provided in a front surface of the display panel, and transmits the left eye image as a first polarized light and transmits the right eye image as a second polarized light; and
a controller which controls the signal processor to compensate for color distortion of the first and second polarized lights which pass through the polarizer.

2. The display apparatus according to claim 1, wherein the left and right eye images are alternately displayed, and the polarizer alternately transmits the left and right eye images as the first and second polarized light in a 3D output mode.

3. The display apparatus according to claim 1, wherein the controller controls the signal processor to compensate for color distortion of light which passes through 3D glasses comprising a left eye lens which transmits the first polarized light and a right eye lens which transmits the second polarized light.

4. The display apparatus according to claim 3, further comprising a storage unit which stores therein at least one of color distortion information of the 3D glasses and color distortion information of the polarizer, wherein
the controller controls the signal processor according to the information stored in the storage unit.

5. The display apparatus according to claim 1, further comprising a color distortion measurer which measures a degree of color distortion of the first and second polarized lights which pass through the polarizer, wherein
the controller controls the compensation for the image according to the measurement result of the color distortion measurer.

6. The display apparatus according to claim 1, further comprising a panel driver which drives the display panel, wherein
the controller controls adjustment of a driving voltage of RGB colors of the panel driver according to the degree of color distortion.

7. The display apparatus according to claim 1, wherein the polarizer transmits the first and second polarized lights as linearly polarized light, and polarizing directions of the first and second polarized lights are perpendicular to each other.

8. The display apparatus according to claim 1, wherein the polarizer transmits the first and second polarized lights as circularly polarized light, and polarizing directions of the first and second polarized lights are opposite from each other.

9. An image processing method of a display apparatus which comprises a display panel displaying thereon a left eye image and a right eye image and a polarizer which transmits the left eye image as a first polarized light and transmits the right eye image as a second polarized light, the method comprising:
receiving an image signal comprising a left eye image and a right eye image;
processing the image signal into a displayable form; and
compensating for color distortion of the first and second polarized lights which pass through the polarizer.

10. The method according to claim 9, wherein the left and right eye images are alternately displayed, and the polarizer alternately transmits the left and right eye images as the first and second polarized lights in a 3D output mode.

11. The method according to claim 11, wherein the compensating for the color distortion comprises compensating for color distortion of light which passes through 3D glasses, the 3D glasses comprising a left eye lens transmitting the first polarized light and a right eye lens transmitting the second polarized light.

12. The method according to claim 9, further comprising storing at least one of color distortion information of the 3D glasses and color distortion information of the polarizer, wherein
the compensating for the color distortion comprises compensating for the color distortion according to the stored information.

13. The method according to claim 9, further comprising measuring a degree of color distortion of the first and second polarized light which pass through the polarizer, wherein
the compensating for the color distortion comprises compensating for the color distortion according to the measured degree of color distortion.

14. The method according to claim 9, wherein the compensating for the color distortion comprises compensating for the color distortion by adjusting a driving voltage of RGB colors driving the display panel, according to the degree of the color distortion.

15. The method according to claim 9, wherein the polarizer transmits the first and second polarized light as a linearly polarized light, and polarizing directions of the first and second polarized light are perpendicular to each other.
